# EUROPEAN PATENT SPECIFICATION

(11) **EP 2 681 282 B1**
(45) Date of publication and mention of the grant of the patent: **29.07.2015**
(21) Application number: 12719902.4
(22) Date of filing: 02.03.2012
(51) Int. Cl.: C09D 5/00

(54) **CERAMERS, THEIR APPLICATION AND USE**
CERAMER, IHRE ANWENDUNG UND VERWENDUNG
CÉRAMÈRES, LEUR APPLICATION ET LEUR UTILISATION

(30) Priority: 03.03.2011 IT FI20110038
(43) Date of publication of application: 08.01.2014
(73) Proprietor: Colorobbia Italia S.p.a., 50053 Sovigliana Vinci (IT)
(72) Inventor: BALDI, Giovanni, I-50056 Montelupo Fiorentino (IT); CIONI, Andrea, I-50053 Empoli (IT); DAMI, Valentina, I-51036 Larciano (IT); BARZANTI, Andrea, I-50050 Cerreto Guidi (IT); LORENZI, Giada, I-51100 Pistoia (IT); MARCHESE, Edoardo Maria, I-10122 Torino (IT); BITOSSI, Marco, I-50056 Montelupo Fiorentino (IT)
(74) Representative: Brighenti, Livio
(86) International application number: PCT/IB2012/050997
(87) International publication number: WO 2012/117380

(56) References cited:
- EP-A1- 2 177 580
- WO-A1-2006/077256
- WO-A1-2008/043396
- WO-A1-2008/106494
- WO-A1-2009/156275
- WO-A1-2010/110726
- DE-A1-102006 012 906
- US-A1- 2009 298 369

## Description

### Field of the invention

This invention relates to the field of coating materials (hereinafter coatings) for application to metal surfaces in general so as to give them anti-adherent, scratch-resistant and antibacterial properties.

### The prior art

Nanotechnologies are now widely used in various sectors, for creating hybrid compositions known as *ceramers.* In the preparation process for these organic substances, as oligomers or polymers, they are intimately mixed with inorganic material (oxides, silicates), so as to obtain compositions that present typical properties of both ceramics (high temperature resistance, rigidity, etc.) and of plastics (plasticity, low-density, ease of transformation, etc.).

The production of these hybrids essentially takes place by means of sol-gel processes. This method allows formation of the inorganic network at temperatures significantly lower than the degradation temperatures of any organic components. The chemical reactions involved in this process may be hydrolysis and simultaneous condensation in solution (sol), of a metal alkoxide network-former until the formation of a three-dimensional network (gel), possibly combined with the polymerization reactions of unsaturated monomers. The incorporation during the formation of the inorganic network of an organic phase that can consist of both low-molecular weight product and of functionalised and non-functionalised oligomers and polymers therefore leads to the formation of true composite materials, wherein the organic and inorganic part constitute separate yet intimately interconnected phases. In the great majority of cases the inorganic component of these structures is represented by silica.

One field in which they are widely used in the polymer coating field where they are used to give the material flame-retardant, scratch-resistant, UV-resistance, gas-barrier properties, etc.

A new field of application of these materials, currently in strong expansion, is that of the treatment of metal surfaces, such as for example aluminium coating for the creation of pots and pans with non-stick properties for domestic use. Indeed, scientific studies have demonstrated that Teflon, normally used as an internal coating for pans, saucepans, etc., has a high toxicity and various companies have therefore launched on the market items having a ceramer coating with non-stick properties to replace this material.

These are generally mixtures containing a silane composition, nanoparticles of silica, an organic acid, a composition from the family of polydimethylsiloxanes, water and a water-miscible solvent and in some cases a pigmenting component of an inorganic nature. The mixture that is obtained is deposited on the metal, which is followed by a drying phase. The coating can be achieved in both one and two layers, depositing a first layer of a mixture not containing the polydimethylsiloxane composition and subsequently one layer of the mixture containing the polydimethylsiloxane composition.

A coating of this type presents significant non-stick and scratch-resistant characteristics that can be associated with the fact that there is less danger associated with the use of the material The limitation of use of this material lies in the fact that if the metal surface does not present a sufficient degree of porosity and/or roughness, the coating has gripping difficulties and tends to manifest chalking phenomena (detachment of the ceramer film). This is linked to the low-elasticity of the ceramer, which cannot therefore be used on perfectly smooth surfaces.

### Summary of the invention

Ceramers comprising titanium and/or zirconium oxide in the form of nanometric particles deriving from aqueous suspensions of titanium or zirconium oxide are described.

### Detailed description of the invention

This invention allows the aforementioned drawbacks to be overcome thanks to new ceramers comprising titanium and/or zirconium oxide in the form of nanometric particles, deriving from aqueous suspensions of titanium or zirconium oxide, wherein said aqueous suspensions of titanium oxide are obtained as described in Patent Application EP 1 996 515 in the name of the same Applicant. In short, as explained in greater detail in the abovementioned application, these are aqueous suspension of nanoparticles of titanium oxide obtained via of a process in which a titanium alkoxide is reacted by heating in water in the presence of a mineral acid and a non-ionic surfactant, and optionally by evaporating the solvent when obtaining the solid product is desired.

The nanometric titanium oxide indeed succeeds in giving the ceramer itself an extremely high substrate adhesion, and therefore chalking resistance (anti-chalking), extremely high elasticity and excellent smoothness while the zirconium oxide gives the ceramer greater mechanical strength and scratch resistance.

The titanium alkoxide used as the starting product in the present process may for example be chosen from the group consisting of titanium methoxide, ethoxide, normal-propoxide, iso-propoxide, normal-butoxide and isobutoxide, titanium isopropoxide being preferred.

The non-ionic surfactants used are tensioactive substances consisting of a non-polar portion and a non-ionizable polar functionality, ethers, esters, ether-esters, with Triton X-100 (TX-100) being particularly preferred.

As acid mineral, according to the invention, we mean for example an acid chosen from the group comprising: hydrochloric acid, nitric acid, sulphuric acid, perchloric acid, hydrobromic acid and hydriodic acid; halogen acids, and hydrochloric acid in particular, being preferred.

The molar titanium oxide/mineral acid ratio is of between 0.005 and 15, preferably between 5 and 6.

The reaction temperature is between 15°C and 95°C, preferably between 45°C and 55°C.

Reaction times are between 12 h and 72 h, preferably 24 hours.

The aqueous suspensions of zirconium oxide according to the invention can be prepared by dissolving in water a soluble zirconium salt (such as for example zirconyl nitrate or chloride) in a concentration range of between 0.1 and 0.6M, heating and boiling for at least 48h, thus obtaining a stable suspension of zirconium oxide nanoparticles. If necessary, an organic salt having a complexing function such as sodium citrate can be added (up to 10% by weight for example) so as to modify the pH of the suspension.

In addition, if desired, the suspension of zirconium nanoparticles, in particular those that have been subject to the above-described pH modification treatment, may be purified by filtration with osmosis membranes and possible reintegration of the water to maintain the concentration of nanoparticles in the suspension constant.

The ceramers according to the present invention are thus obtained starting from a mixture of a silane composition (trimethoxymethylsilane, triethoxymethylsilane, etc.) with an aqueous suspension of titanium and/or zirconium oxide nanoparticles, as described above, in the presence of an organic acid or an aqueous solution of NaOH (normally 1 - 15%), of a water-soluble organic solvent and possibly of a micrometric pigment or of an inorganic micrometric opacifier.

Of the organic acids, formic acid and acetic acid are preferred.

Ethyl alcohol and isopropyl alcohol can be preferably used as organic water-soluble solvent.

Lastly, possible examples of inorganic opacifier in micrometric form are: ZrSiO₄, CeO₂ TiO₂, while as regards the inorganic pigments, those known in the prior art can be used, preferably yellow, titanate-based pigments, blue cobalt and zinc illuminate-based pigments, brown and black iron, chromium and cobalt oxide-based pigments, iridescent Iriondin^{©} based pigments produced by the company Merck).

The black pigment, if desire, is obtained with carbon black and carbon nanotubes. To prepare the ceramers according to the invention, a suspension of titanium dioxide containing 6.0% nanoparticles by weight (10-40% by weight) obtained as previously described, is mixed with deionised water (10-30% by weight) and possibly isopropyl alcohol (0-10% by weight).

A silane is diluted into the mixture with stirring, preferably trimethoxymethylsilane or triethoxymethylsilane (35-70% by weight) and an aqueous sodium hydroxide solution at 10% (0-2% by weight) is then added so as to bring the pH to approximately 4.5. Finally, any pigment or opacifier (5-10% by weight) is added. After stirring, the coating is filtered and is ready for application to the desired surface.

It should also be noted that, where it should be deemed necessary, nanomaterials can be added to the composition, for example nano-Ag⁰, nano-Cu⁰ or nano-CeO₂ nano Al₂O₃, nanoferrites having the formula M^{II}M^{III}₂O₄, where M^{II} = Fe²⁺, Co²⁺, M^{III}= Fe³⁺, nano-hydroxyapatite (HA), silica, capable of exercising their intrinsic action: antibacterial action, without UV light irradiation (Ag⁰), thermo-catalytic action (CeO₂), increase in resistance (Al₂O₃) or magnetic action (nanoferrites).

These further materials can therefore be added to the ceramer composition mixture or can be present as dopants of the titanium oxide in suspension and in such cases can be obtained via the addition of a salt thereof in stage i) or alternatively in stage iii) of the process as described above, that will in this way lead to the formation of a TiO₂ dispersion doped with Ag⁰, Cu⁰ o CeO₂, Al₂O₃, nanoferrites, nano-hydroxyapatite.

The above-described metals in nanometric form can be obtained with the processes of the prior art.

One example of the obtainment process is described in patent application WO2010/100107, in this case operating in an aqueous environment at ambient pressure, heating to a reaction temperature of between 25 - 90°C with a microwave apparatus, placing a metal precursor salt in the reaction environment already heated to the reaction temperature and containing a reducing agent, a chelating agent and a catalyser.

The reducing agent is preferably chosen from; glucose, galactose, maltose, lactose, sucrose.

The chelating agent is preferably chosen from polyvinyl alcohol PVA, polyvinylpyrrolidone PVP, sodium lauryl sulphate, sodium dodecyl benzene sulphonate SDBS, cetyltrimethylammonium bromide CTAB, tetraoctylammonium bromide TOAB, triton X-100, polyethylene glycol PEG, ethylenediaminetetraacetic acid EDTA, starch, β-cyclodextrin β-CD, while the catalyser is chosen from: alkaline metal hydroxides, carbonates, ammonia, urea.

The chelating agent/metal ratio is of between 1 - 10, while the reducer/metal ratio is of between 1 and 2.

The catalyser/metal ratio is of between 1.4 and 7.9.

This application is used in the coating of various metal supports, such as aluminium, steel, brass, bronze, on glass surfaces, ceramics, on wood and on plastic.

Application takes place according to known procedures for the application of these products and can be carried out in such a way as to create one or more superimposed layers.

The nanometric Ag⁰ is preferably applied as the last external layer so that it may better exercise its antibacterial action as described in example 26.

Various examples of the preparation of ceramers according to the invention and of ceramers also containing a composition from the polydimethylsiloxanes family, referring to applications of two-layer coatings, are provided below,

### Example 1

### Preparation of zirconium suspensions

### (reference example)

a) 31 kg of a zirconyl nitrate solution is placed in a reactor together with 129 kg of purified water. The solution is brought to the boil and left in this condition for 48 h. The solution is left to cool and a nanoparticle zirconia suspension is recovered.
b) 45 kg of the suspension obtained are taken and stirred with a mechanical stirrer. 5 kg of sodium citrate are slowly added and then left to mix for 2 h.
c) 10 kg of the suspension obtained in step (b) are taken and placed in the tank of the diafiltration machine. Diafiltration is initiated eliminating the aqueous solution containing the dissolved salts, the suspension retained in the tank is recovered and the tank is topped up with water while maintaining the weight of the tank constant at 10 kg. The process ends when at least 10 kg of ultrapure water have been added. A nanoparticle zirconia suspension is recovered at the same concentration as the initial suspension.
d) 10 kg of the suspension of step (c) are taken and placed in the tank of the diafiltration machine. The aqueous solution that passes through the membrane is discarded and the tank is topped up with ultrapure water. The process ends when 5 kg of product remains in the tank. A nanoparticle zirconia suspension, having double the concentration of the original suspension, is recovered.

### Example 2

Preparation of a suspension of titanium dioxide in nanometric form (reference example)

In a 2 I reactor, heated by diathermic oil circulating in the external sleeve, 5 g conc. HCl, 75 g of TX-100 and water are added until the weight of 750 g is reached. The temperature is brought to 50°C. Subsequently 50 g of Ti[OCH(CH₃)₂]₄ (TIP) are very quickly added and the formation of a white, flocky precipitate is immediately observed.

After 7 hours there is the formation of a very stable transparent sol.

### Example 3 (two-layer ceramic coating, composition of the underlying layer)

37.77 g of a nanometric titanium dioxide suspension according to example 2 in aqueous solution brought to 6.0% by weight by means of further dilution in water, having pH of around 1, are mixed with 10.75 g of deionised water and with 5.10 g of isopropyl alcohol (IP97, Brentagg). The mixture is stirred and 37.20 g of trimethoxymethylsilane (Xiameter OFS-6070 Silane, Dow Corning) are added. At this point, 2.07 g of an aqueous sodium hydroxide solution at 10% by weight is added so as to bring the pH to approximately 4.5. Finally, 7.10 g of white pigment (MMO 300, anatase, Tioxide) are added. After stirring, the coating is filtered and applied to a steel plate having a thickness of 20-25 µm.

### Example 4 (two-layer ceramic coating, composition of the underlying layer)

Some sodium citrate is added to the nanometric titanium dioxide produced according to example 2 to a pH of 5.5-6.0 and is thus subjected to dialysis using 500 kilo Dalton membranes so as to eliminate some of the salts and to concentrate the suspension to 16% in nanoparticle weight.

37.92 g of the nanometric titanium dioxide suspension in aqueous solution at 16.0% by weight, having a pH of around 5.5-6.0, are mixed with 15.76 g of deionised water. The mixture is stirred and 1.70 g of glacial acetic acid (Aldrich) are added, bringing the pH to approximately 4.5. 37.33 g of trimethoxymethylsilane (Xiameter OFS-6070 Silane, Dow Corning) are subsequently added. Finally, 7.29 g of white pigment (MMO 300, anatase, Tioxide) are added. After stirring, the coating is filtered and applied to a steel plate having a thickness of 20-25 µm.

Example 5 (two-layer ceramic coating, composition of the underlying layer) Some sodium citrate is added to the nanometric zirconium produced according to example 1 to a pH of 5.5-6.0 and is thus subjected to dialysis using 500 kilo Dalton membranes so as to eliminate some of the salts and to concentrate the suspension to 10% in nanoparticle weight.

37.80 g of the nanometric titanium dioxide suspension in aqueous solution at 10% by weight, having a pH of around 5.5-6.0, are mixed with 15.71 g of deionised water. The mixture is stirred and 2.00 g of glacial acetic acid (Aldrich) are added, bringing the pH to approximately 4.5. 37.23 g of trimethoxymethylsilane (Xiameter OFS-6070 Silane, Dow Corning) are subsequently added. Finally, 7.29 g of white pigment (MMO 300, anatase, Tioxide) are added. After stirring, the coating is filtered and applied to a steel plate having a thickness of 20-25 µm.

### Example 6 (two-layer ceramic coating, composition of the underlying layer)

37.77 g of a nanometric titanium dioxide suspension according to example 2 in aqueous solution brought to 6.0% by weight by means of further dilution in water, having pH of around 1, are mixed with 5.75 g of deionised water and with 5.10 g of isopropyl alcohol (IP97, Brentagg). The mixture is stirred and 42.20 g of trimethoxymethylsilane (Xiameter OFS-6070 Silane, Dow Corning) are added. At this point, 2.07 g of an aqueous sodium hydroxide solution at 10% by weight is added so as to bring the pH to approximately 3.5. Finally, 7.10 g of white pigment (MMO 300, anatase, Tioxide) are added. After stirring, the coating is filtered and applied to a steel plate having a thickness of 20-25 µm.

### Example 7 (two-layer ceramic coating, composition of the underlying layer)

37.77 g of a nanometric titanium dioxide suspension according to example 2 in aqueous solution brought to 6.0% by weight by means of further dilution in water, having pH of around 1, are mixed with 2.75 g of deionised water and with 5.10 g of isopropyl alcohol (IP97, Brentagg). The mixture is stirred and 45.20 g of trimethoxymethylsilane (Xiameter OFS-6070 Silane, Dow Corning) are added. At this point, 2.07 g of an aqueous sodium hydroxide solution at 10% by weight is added so as to bring the pH to approximately 3.5. Finally, 7.10 g of white pigment (MMO 300, anatase, Tioxide) are added. After stirring, the coating is filtered and applied to a steel plate having a thickness of 20-25 µm.

### Example 8 (two-layer ceramic coating, composition of the underlying layer)

37.77 g of a nanometric titanium dioxide suspension according to example 2 in aqueous solution brought to 6.0% by weight by means of further dilution in water, having pH of around 1, are mixed with 10.75 g of deionised water and with 5.10 g of isopropyl alcohol (IP97, Brentagg). The mixture is stirred and 37.20 g of trimethoxymethylsilane (Xiameter OFS-6070 Silane, Dow Corning) are added. At this point, 2.07 g of an aqueous sodium hydroxide solution at 10% by weight is added so as to bring the pH to approximately 4.5. Finally, 7.10 g of white pigment (Zircobit MO/S, zircon, Colorobbia) are added. After stirring, the coating is filtered and applied to a steel plate having a thickness of 20-25 µm.

### Example 9 (two-layer ceramic coating, composition of the underlying layer)

Some sodium citrate is added to the nanometric titanium dioxide produced according to example 2 to a pH of 5.5-6.0 and is thus subjected to dialysis using 500 kilo Dalton membranes so as to eliminate some of the salts and to concentrate the suspension to 16.0% in nanoparticle weight.

19.36 g of the nanometric titanium dioxide suspension in aqueous solution at 16% by weight, having a pH of around 5.5-6.0, are mixed with 21.59 g of deionised water. The mixture is stirred and 51.14 g of triethoxymethylsilane (Xiameter OFS-6070 Silane, Dow Corning) are added. Subsequently, 0.33 of glacial acetic acid (Aldrich) are added, bringing the pH to approximately 4.5. Finally, 7.58 of white pigment (MMO 300, anatase, Tioxide) are added. After stirring, the coating is filtered and applied to a steel plate having a thickness of 20-25 µm.

### Example 10 (two-layer ceramic coating, composition of the underlying layer)

Some sodium citrate is added to the nanometric zirconium produced according to example 1 to a pH of 5.5-6.0 and is thus subjected to dialysis using 500 kilo Dalton membranes so as to eliminate some of the salts and to concentrate the suspension to 10.0% in nanoparticle weight.

23.35 g of the nanometric zirconium dioxide suspension in aqueous solution at 10% by weight, having a pH of around 5.5-6.0, are mixed with 21.74 g of deionised water. The mixture is stirred and 46.71 g of trimethoxymethylsilane (Xiameter OFS-6070 Silane, Dow Corning) are added. Subsequently, 0.83 of glacial acetic acid (Aldrich) are added, bringing the pH to approximately 4.5. Finally, 7.36 of white pigment (MMO 300, anatase, Tioxide) are added. After stirring, the coating is filtered and applied to a steel plate having a thickness of 20-25 µm.

### Example 11 (two-layer ceramic coating, composition of the underlying layer)

The nanometric titanium dioxide produced according to example 2 is concentrated to a nanoparticle weight of 16%.

17.46% of a titanium dioxide suspension in aqueous solution at 16.0% by weight, having a pH or around 1.0, are mixed with 14.45 g of deionised water and with 6.85 g of isopropyl alcohol (IP97, Brentagg). The mixture is stirred and 49.95 g of trimethoxymethylsilane (Xiameter OFS-6070 Silane, Dow Corning) are added. At this point, 1.76 g of an aqueous sodium hydroxide solution at 10.0% by weight are added so as to bring the pH to approximately 4.5. Finally, 9.54 g of white pigment (Zircobit MO/S, zircon, Colorobbia) are added. After stirring, the coating is filtered and applied to a steel plate having a thickness of 20-25 µm.

### Example 12 (two-layer ceramic coating, composition of the underlying layer)

Some sodium citrate is added to the nanometric titanium dioxide produced according to example 2 to a pH of 5.5-6.0 and is thus subjected to dialysis using 500 kilo Dalton membranes so as to eliminate some of the salts and to concentrate the suspension to 16.0% in nanoparticle weight.

19.36 g of the nanometric titanium dioxide suspension in aqueous solution at 16% by weight, having a pH of around 5.5-6.0, are mixed with 21.59 g of deionised water. The mixture is stirred and 51.14 g of triethoxymethylsilane (Xiameter OFS-6370 Silane, Dow Corning) are added. Subsequently, 0.33 of glacial acetic acid (Aldrich) are added, bringing the pH to approximately 4.5. Finally, 7.58 of white pigment (MMO 300, anatase, Tioxide) are added. After stirring, the coating is filtered and applied to a steel plate having a thickness of 20-25 µm.

### Example 13 (two-layer ceramic coating, composition of the underlying layer)

Some sodium citrate is added to the nanometric titanium dioxide produced according to example 2 to a pH of 5.5-6.0 and is thus subjected to dialysis using 500 kilo Dalton membranes so as to eliminate some of the salts and to concentrate the suspension to 16.0% in nanoparticle weight.

12.15 g of the nanometric titanium dioxide suspension in aqueous solution at 16% by weight, having a pH of around 5.5-6.0, are mixed with 13.15 g of deionised water. The mixture is stirred and 66.52 g of triethoxymethylsilane (Xiameter OFS-6370 Silane, Dow Corning) are added. Subsequently, 0.21 of glacial acetic acid (Aldrich) are added, bringing the pH to approximately 4.5. Finally, 7.58 of white pigment (MMO 300, anatase, Tioxide) are added. After stirring, the coating is filtered and applied to a steel plate having a thickness of 20-25 µm.

### Example 14 (two-layer ceramic coating, composition of the underlying layer)

Some sodium citrate is added to the nanometric zirconium produced according to example 1 to a pH of 5.5-6.0 and is thus subjected to dialysis using 500 kilo Dalton membranes so as to eliminate some of the salts and to concentrate the suspension to 10% in nanoparticle weight.

23.35 g of the zirconium dioxide suspension in aqueous solution at 10% by weight, having a pH of around 5.5-6.0, are mixed with 21.74 g of deionised water. The mixture is stirred and 46.71 g of triethoxymethylsilane (Xiameter OFS-6370 Silane, Dow Corning) are added. Subsequently, 0.83 of glacial acetic acid (Aldrich) are added, bringing the pH to approximately 4.5. Finally, 7.36 of white pigment (MMO 300, anatase, Tioxide) are added. After stirring, the coating is filtered and applied to a steel plate having a thickness of 20-25 µm.

### Example 15 (two-layer ceramic coating, composition of the underlying layer)

37.77 g of a nanometric titanium dioxide suspension according to example 2 in aqueous solution brought to 6.0% by weight by means of further dilution in water, having pH of around 1.0, are mixed with 2.75 g of deionised water and with 5.10 g of isopropyl alcohol (IP97, Brentagg). The mixture is stirred and 45.20 g of trimethoxymethylsilane (Xiameter OFS-6070 Silane, Dow Corning) are added. At this point, 2.07 g of an aqueous sodium hydroxide solution at 10% by weight is added so as to bring the pH to approximately 3.5. Finally, 7.10 g of Iriodin^{®} 500 (10-60 µm, Merck) are added. After stirring, the coating is filtered and applied to a steel plate having a thickness of 20-25 µm.

### Example 16 (two-layer ceramic coating, composition of the underlying layer)

37.77 g of a nanometric titanium dioxide suspension according to example 2 in aqueous solution brought to 6.0% by weight by means of further dilution in water, having pH of around 1.0, are mixed with 2.75 g of deionised water and with 5.10 g of isopropyl alcohol (IP97, Brentagg). The mixture is stirred and 45.20 g of trimethoxymethylsilane (Xiameter OFS-6070 Silane, Dow Corning) are added. At this point, 2.07 g of an aqueous sodium hydroxide solution at 10% by weight is added so as to bring the pH to approximately 3.5. Finally, 7.10 g of carbon black (Xfast Schwarz 0066, Basf) are added. After stirring, the coating is filtered and applied to a steel plate having a thickness of 20-25 µm.

### Example 17 (two-layer ceramic coating, composition of the underlying layer)

37.77 g of a nanometric titanium dioxide suspension according to example 2 in aqueous solution brought to 6.0% by weight by means of further dilution in water, having pH of around 1.0, are mixed with 2.75 g of deionised water and with 5.10 g of isopropyl alcohol (IP97, Brentagg). The mixture is stirred and 45.20 g of trimethoxymethylsilane (Xiameter OFS-6070 Silane, Dow Corning) are added. At this point, 2.07 g of an aqueous sodium hydroxide solution at 10.0% by weight is added so as to bring the pH to approximately 3.5. Finally, 7.10 g of a mixture comprising 87.5% by weight of yellow pigment (Zircobit MO/S, zircon, PGE6618, rutile, Colorobbia Spain) and 12.5% by weight of blue pigment (PGE61014, spinel, Colorobbia Spain) is added. After stirring, the coating is filtered and applied to a steel plate having a thickness of 20-25 µm.

### Example 18 (two-layer ceramic coating, composition of the overlying layer)

38.74 g of a nanometric titanium dioxide suspension according to example 2 in aqueous solution brought to 6.0% by weight by means of further dilution in water, having pH of around 1.0, are mixed with 11.0 g of deionised water and with 5.21 g of isopropyl alcohol (IP97, Brentagg). The mixture is stirred and 38.02 g of trimethoxymethylsilane (Xiameter OFS-6070 Silane, Dow Corning) are added. At this point, 2.50 g of an aqueous sodium hydroxide solution at 10% by weight is added so as to bring the pH to approximately 4.5. Finally, 4.53 g of hydroxy-terminated polydimethylsiloxane (Xiameter PMX-0156 Silanol fluid, Dow Corning) are added. After stirring, the coating is filtered and applied to a steel plate onto which a pigmented ceramic layer having a thickness of 3-10 µm has been applied. Example 19 (two-layer ceramic coating, composition of the overlying layer).

Some sodium citrate is added to the nanometric titanium dioxide produced according to example 2 to a pH of 5.5-6.0 and is thus subjected to dialysis using 500 kilo Dalton membranes so as to eliminate some of the salts and to concentrate the suspension to 16% nanoparticles by weight.

39.25 g of the nanometric titanium dioxide suspension in aqueous solution at 16.0% by weight, having a pH of around 5.5-6.0, are mixed with 16.31 g of deionised water. The mixture is stirred and 1.66 g of glacial acetic acid (Aldrich) are added, bringing the pH to approximately 4.5. 38.65 g of trimethoxymethylsilane (Xiameter OFS-6070 Silane, Dow Corning) are subsequently added). 4.13 of a mixture comprising 1/3 by weight of hydroxy-terminated polydimethylsiloxane (Xiameter PMX-0156 Silanol fluid, Dow Corning) and 2/3 of isopropyl alcohol (IP97, Brentagg). After stirring, the coating is filtered and applied to a steel plate having a thickness of 3-10 µm.

### Example 20 (two-layer ceramic coating, composition of the overlying layer).

Some sodium citrate is added to the nanometric titanium dioxide produced according to example 2 to a pH of 5.5-6.0 and is thus subjected to dialysis using 500 kilo Dalton membranes so as to eliminate some of the salts and to concentrate the suspension to 16.0% by weight of nanoparticles.

19.81 g of the nanometric titanium dioxide suspension in aqueous solution at 16% by weight, having a pH of around 5.5-6.0, are mixed with 22.10 g of deionised water. The mixture is stirred and 52.34 g of trimethoxymethylsilane (Xiameter OFS-6070 Silane, Dow Corning) are added. Subsequently, 0.34 g of glacial acetic acid (Aldrich) are added, bringing the pH to approximately 4.5. Then 5.40 g of a mixture comprising 20% by weight of hydroxy-terminated polydimethylsiloxane (Xiameter PMX-0156 Silanol fluid, Dow Corning) and 80% by weight of isopropyl alcohol (IP97, Brentagg) are added. After stirring, the coating is filtered and applied to a steel plate having a thickness of 3-10 µm.

### Example 21 (two-layer ceramic coating, composition of the overlying layer)

Some sodium citrate is added to the nanometric zirconium produced according to example 1 to a pH of 5.5-6.0 and is thus subjected to dialysis using 500 kilo Dalton membranes so as to eliminate some of the salts and to concentrate the suspension to 10.0% nanoparticles by weight.

38.29 g of the zirconium dioxide suspension in aqueous solution at 10% by weight, having a pH of around 5.5-6.0, are mixed with 15.91 g of deionised water. The mixture is stirred and 2.03 g of glacial acetic acid are added (Aldrich), bringing the pH to approximately 4.5. Subsequently, 37.70 g of trimethoxymethylsilane (Xiameter OFS-6070 Silane, Dow Corning) are added. Subsequently, 4.05 g of isopropyl alcohol (IP97, Brentagg) and 2.03 g of hydroxy-terminated polydimethylsiloxane (Xiameter PMX-0156 Silanol fluid, Dow Corning) are added. After stirring, the coating is filtered and applied to a steel plate having a thickness of 3-10 µm.

### Example 22 (two-layer ceramic coating, composition of the overlying layer)

Some sodium citrate is added to the nanometric zirconium produced according to example 1 to a pH of 5.5-6.0 and is thus subjected to dialysis using 500 kilo Dalton membranes so as to eliminate some of the salts and to concentrate the suspension to 10.0% nanoparticles by weight.

23.88 g of the zirconium dioxide suspension in aqueous solution at 10% by weight, having a pH of around 5.5-6.0, are mixed with 22.24 g of deionised water. The mixture is stirred and 47.78 g of trimethoxymethylsilane (Xiameter OFS-6070 Silane, Dow Corning) are added. Subsequently, 0.85 g of glacial acetic acid (Aldrich) are added, bringing the pH to approximately 4.5. Then 5.25 g of a mixture comprising 20% by weight of hydroxy-terminated polydimethylsiloxane (Xiameter PMX-0156 Silanol fluid, Dow Corning) and 80% by weight of isopropyl alcohol (IP97, Brentagg) are added. After stirring, the coating is filtered and applied to a steel plate having a thickness of 3-10 µm.

### Example 23 (single-layer ceramic coating)

Sodium citrate of up to pH 5.5-6.0 is added to the nanometric titanium dioxide produced according to example 2 and is therefore subjected to dialysis using 500 kilo membranes at 16% nanoparticles by weight.

37.42 g of the nanometric titanium dioxide suspension in aqueous solution at 16% by weight, having a pH of around 5.5-6.0, are mixed with 15.55 g of deionised water. The mixture is stirred and 1.68 g of glacial acetic acid (Aldrich) are added, bringing the pH to approximately 4.5. Subsequently 36.85 g of trimethoxymethylsilane (Xiameter OFS-6070 Silane, Dow Corning) and 1.31 g of hydroxy-terminated polydimethylsiloxane (Xiameter PMX-0156 Silanol fluid, Dow Corning) are subsequently added. Finally, 7.19 g of white pigment (MMO 300, anatase, Tioxide) are added. After stirring, the coating is filtered and applied to a steel plate having a thickness of 20-25 µm.

### Example 24 Preparation of nanometre silver

2.76 of PVP k25 (Mwa=29000) are dissolved in 70 ml of water. Two solutions are separately prepared: one AgNO₃ 0.26 M (0.75 of salt in 17 ml of water) solution and one d(+)glucose 1.11 M (0.80 g of glucose in 4 ml of water) solution.

The glucose solution and 0.25 g of NaOH are added to the PVP solution which is then heated to 70°C in a microwave, setting a maximum power of 200W. When the system reaches 70°C, the aqueous AgNO₃ solution is injected and the reaction is allowed to proceed for 3 min. The molar ratios used are the following: nPVP/nAgNO₃ = 5.5; nNaOH/nAgNO₃ = 1.4; nGlucose/nAgNO₃ = 1.

With the addition of AgNO3 the solution immediately turns brown in colour, with intense yellow highlights. No precipitate is observed.

The concentration by weight of Ag⁰ is equal to 0.5% by weight.

### Example 25

### Preparation of nanometre silver

5.90 g of PVP k30 (Mwa= 35,000-40,000) are dissolved in 76.39 ml of water and heated to 70°C. 0.53 g of NaOH flakes and 1.70 g of glucose powder (99.0% Cargill) are added to the solution. A solution obtained by dissolving 6.4 g of AgNO₃ in 9.08 g of di H₂O is added after 30'. It is then allowed to cool thus obtaining a 4.0% by weight Ag⁰ nanoparticle suspension.

### Example 26 (triple-layer ceramic coating, composition of all the layers)

a) Base: 37.77 g of a nanometric titanium dioxide suspension according to example 2 in aqueous solution brought to 6.0% by weight by means of further dilution in water, having pH of around 1, is mixed with 10.75 g of deionised water and with 5.10 g of isopropyl alcohol (IP97, Brentagg). The mixture is stirred and 37.20 g of trimethoxymethylsilane (Xiameter OFS-6070 Silane, Dow Corning) are added. At this point, 2.07 g of an aqueous sodium hydroxide solution at 10% by weight is added so as to bring the pH to approximately 4.5. Finally, 7.10 g of white pigment (MMO 300, anatase, Tioxide) are added. After stirring, the coating is filtered and applied to a steel plate having a thickness of 20-25 µm.
b) Top: 38.74 g of a nanometric titanium dioxide suspension according to example 2 in aqueous solution brought to 6.0% by weight by means of further dilution in water, having pH of around 1.0, are mixed with 11.00 g of deionised water and with 5.21 g of isopropyl alcohol (IP97, Brentagg). The mixture is stirred and 38.02 g of trimethoxymethylsilane (Xiameter OFS-6070 Silane, Dow Corning) are added. At this point, 2.50 g of an aqueous sodium hydroxide solution at 10% by weight is added so as to bring the pH to approximately 4.5. Finally, 4.53 g of hydroxyl-terminated polydimethylsiloxane (Xiameter PMX-0156 Silanol fluid, Dow Corning) are added. After stirring, the coating is filtered and applied to a steel plate onto which a ceramic layer having a thickness of 3-10 µm has been applied as described in point (a).
c) a silver nanoparticle solution according to example 22 in aqueous solution at 4.0% by weight, is applied on top of the application of the top coat as described in point (b). The finish is thus treated at 120° for 30'.

### Example 27

### Preparation of a titanium dioxide suspension doped with silica in nanometric form (reference example)

In, a 2l reactor heated by means of heated by diathermic oil circulating in the external sleevediathermic oil circulating in the external sleeve. 80 g of a nanometric suspension of TiO2 at 16% are placed together with 20 g of TEOS (tetraethoxysilane) and with 20g of ethyl alcohol and reacted for 2 hours. To the reaction batch thus obtained are added 400 g of ultrapure water. The system is vigorously stirred with the subsequent addition of 1000 g of a previously prepared solution, obtained by mixing 700 g of a nanometric nanoparticle silica suspension in water at 40% and 250 g of 0.1 molar sodium hydroxide. On conclusion of the addition a nanoparticle suspension having average dimensions of ca 20 nm and pH 9.4 is obtained.

### EXAMPLE 28 (two-layer ceramic coating, composition of the underlying layer)

### Component A:

Composite Ex. 27 69.6%
Ultrapure H2O purified by reverse osmosis 12.3%
Pigment d50 ca. 1 micron 18.1%

The components are mixed in the specified proportions with the aid of a ball mill so as to disperse the pigment in a correct manner.

The duration of the dispersion process is of 1 h.

At the end of the dispersion process the liquid product obtained is filtered using a steel, 1000-mesh filter and placed in drums.

### Component B :

| | |
|---|---|
| Methyltetraethoxysilane | 79.0% |
| Glacial Acetic Acid | 7.4% |
| Isopropanol | 13.6% |

The components, all in liquid state, are perfectly miscible and are therefore mixed and placed in drums. It is not necessary to filter the formulation.

The simplicity of the process also allows direct dosage of the components into the drum in which it is to be transported.

### Example 29 (ceramic two-layer coating, composition of the overlying layer) Component A:

| | |
|---|---|
| Composite Ex. 27 | 85% |
| Ultrapure H2O purified by reverse osmosis | 15% |

The components, all in liquid state, are perfectly mixable and are therefore mixed and placed in drums. It is not necessary to filter the formulation.

The simplicity of the process also allows direct dosage of the components into the drum in which it is to be transported.

### Component B:

| | |
|---|---|
| Methyltetraethoxysilane | 80.3% |
| Glacial Acetic Acid 5.1% | |
| Isopropanol | 9.5% |
| Polydimethylsiloxane | 5.1% |

The components, all in liquid state, are perfectly miscible and are therefore mixed and placed in drums. It is not necessary to filter the formulation.

The simplicity of the process also allows direct dosage of the components into the drum in which it is to be transported.

The products obtained are then applied as described in the foregoing examples.

## Claims

1. Ceramers comprising titanium oxide and/or zirconium oxide in the form of nanometric particles derived from aqueous suspensions of titanium oxide or zirconium oxide, wherein said aqueous suspensions of titanium oxide in the form of nanometric particles are obtained via a process in which a titanium alkoxide is reacted by heating in water in the presence of a mineral acid and a non-ionic surfactant and optionally by evaporating the solvent when obtaining the solid product is desired.

2. Ceramers according to claim 1, wherein said alkoxides are chosen from: titanium methoxide, ethoxide, normal-propoxide, iso-propoxide, normal-butoxide, and isobutoxide.

3. Ceramers according to claim 1, wherein said mineral acid is chosen from: hydrochloric acid, nitric acid, sulphuric acid, perchloric acid, hydrobromic acid and hydriodic acid.

4. Ceramers according to claim 1, wherein said non-ionic surfactants are tensioactive substances consisting of a non-polar portion and a non-ionizable polar functionality, ethers, esters, ether-esters.

5. Ceramers according to claim 1, wherein said aqueous suspensions of zirconium oxide are obtained by dissolving a soluble zirconium salt in water and maintaining the boiling for at least 48 h.

6. Ceramers according to claims 1-5 also comprising nanomaterials, consisting of metals chosen from Ag⁰, Cu⁰, CeO₂ Al₂O₃, ferrites (M^{II}M^{III}2^{O}₄, M^{II} = Fe²⁺, Co²⁺, M^{III}= Fe³⁺), hydroxyapatite (HA), silica or mixtures thereof.

7. Ceramers according to claim 6, wherein said metals are added to the mixture of ceramer composition or are present as dopants of the titanium oxide in suspension.

8. Process for preparing ceramers according to claims 1-7, wherein:
- a suspension of titanium dioxide in the form of nanoparticles, optionally in combination with the other nanometric metal particles as defined in claim 6, is mixed with deionized water and isopropyl alcohol.
- trimethoxymethylsilane is diluted in the mixture with stirring, and an aqueous sodium hydroxide solution is added thereto so as to bring the pH to approximately 4.5.
- the optional pigment and/or opacifier is added and, after stirring, the coating is filtered.

9. Use of ceramers according to claims 1-7 for application to metal surfaces.

10. Use according to claim 9, wherein said application consists of one or more superimposed ceramer layers.

## Patentansprüche

1. Ceramere, umfassend Titanoxid und/oder Zirconiumoxid in Form von nanoskaligen Teilchen, die sich von wässrigen Suspensionen von Titanoxid oder Zirconiumoxid ableiten, wobei die wässrigen Suspensionen von Titanoxid in Form von nanoskaligen Teilchen nach einem Verfahren erhalten werden, bei dem ein Titanalkoxid durch Erhitzen in Wasser in Gegenwart einer Mineralsäure und eines nichtionischen Tensids und gegebenenfalls durch Verdampfen des Lösungsmittels, wenn der Erhalt des festen Produkts gewünscht ist, umgesetzt wird.

2. Ceramere nach Anspruch 1, wobei die Alkoxide aus Titanmethoxid, -ethoxid, -normal-propoxid, -isopropoxid-, -normal-butoxid und -isobutoxid ausgewählt werden.

3. Ceramere nach Anspruch 1, wobei die Mineralsäure aus Salzsäure, Salpetersäure, Schwefelsäure, Perchlorsäure, Bromwasserstoffsäure und Iodwasserstoffsäure ausgewählt wird.

4. Ceramere nach Anspruch 1, wobei es sich bei den nichtionischen Tensiden um tensioaktive Substanzen handelt, die aus einem unpolaren Teil und einer nicht ionisierbaren polaren Funktionalität, Ethern, Estern, Etherestern bestehen.

5. Ceramere nach Anspruch 1, wobei die wässrigen Suspensionen von Zirconiumoxid erhalten werden, indem man ein lösliches Zirconiumsalz in Wasser löst und über einen Zeitraum von mindestens 48 h am Sieden hält.

6. Ceramere nach den Ansprüchen 1-5, die außerdem Nanomaterialien bestehend aus Metallen ausgewählt aus Ag⁰, Cu⁰, CeO₂, Al₂O2, Ferriten (M^{II}M^{III}₂O₄, M^{II}= Fe²⁺, Co²⁺, M^{III} = Fe³⁺), Hydroxyapatit (HA), Siliciumdioxid oder Mischungen davon umfassen.

7. Ceramere nach Anspruch 6, wobei die Metalle zu der Mischung der Ceramerzusammensetzung gegeben werden oder als Dotierstoffe des Titanoxids in Suspension vorliegen.

8. Verfahren zur Herstellung von Cerameren nach den Ansprüchen 1-7, bei dem man:
- eine Suspension von Titandioxid in Form von Nanopartikeln, gegebenenfalls in Kombination mit den anderen nanoskaligen Metallteilchen gemäß Anspruch 6, mit entionisiertem Wasser und Isopropylalkohol mischt,
- in der Mischung unter Rühren Trimethoxymethylsilan verdünnt und eine wässrige Natriumhydroxidlösung zugibt, um den pH-Wert auf ungefähr 4,5 zu bringen,
- das fakultative Pigment und/oder Trübungsmittel zugibt und nach Rühren die Beschichtung filtriert.

9. Verwendung von Cerameren nach den Ansprüchen 1-7 zur Aufbringung auf Metalloberflächen.

10. Verwendung nach Anspruch 9, bei dem die Aufbringung aus einer oder mehreren übereinanderliegenden Ceramerschichten besteht.

## Revendications

1. Céramères comprenant de l'oxyde de titane et/ou de l'oxyde de zirconium sous la forme de particules nanométriques dérivées de suspensions aqueuses d'oxyde de titane ou d'oxyde de zirconium, dans lesquels lesdites suspensions aqueuses d'oxyde de titane sous la forme de particules nanométriques sont obtenues via un procédé dans lequel un alcoxyde de titane est mis en réaction par chauffage dans l'eau en présence d'un acide minéral et d'un surfactant non ionique et facultativement par évaporation du solvant lorsque l'obtention du produit solide est souhaitée.

2. Céramères selon la revendication 1, dans lesquels lesdits alcoxydes sont choisis parmi : le méthoxyde de titane, l'éthoxyde, le n-propoxyde, l'iso-propoxyde, le n-butoxyde, et l'isobutoxyde.

3. Céramères selon la revendication 1, dans lesquels ledit acide minéral est choisi parmi : l'acide chlorhydrique, l'acide nitrique, l'acide sulfurique, l'acide perchlorique, l'acide bromhydrique et l'acide iodhydrique.

4. Céramères selon la revendication 1, dans lesquels lesdits surfactants non ioniques sont des substances tensioactives constituées d'une partie non polaire et d'une fonctionnalité polaire non ionisable, d'éthers, d'esters, d'éthers esters.

5. Céramères selon la revendication 1, dans lesquels lesdites suspensions aqueuses d'oxyde de zirconium sont obtenues par dissolution dans l'eau d'un sel de zirconium soluble et maintien de l'ébullition pendant au moins 48 heures.

6. Céramères selon les revendications 1 à 5, comprenant en outre des nanomatériaux, constitués de métaux choisis parmi Ag⁰, Cu⁰, CeO₂ Al₂O₃, les ferrites (M^{II}M^{III}₂O₄, M^{II} = Fe²⁺, Co²⁺, M^{III}= Fe³⁺), l'hydroxyapatite (HA), la silice ou les mélanges de ceux-ci.

7. Céramères selon la revendication 6, dans lesquels lesdits métaux sont ajoutés au mélange de composition de céramères ou sont présents en tant que dopants de l'oxyde de titane en suspension.

8. Procédé de préparation de céramères selon les revendications 1 à 7, dans lequel :
- une suspension de dioxyde de titane sous la forme de nanoparticules, facultativement en combinaison avec les autres particules de métal nanométriques selon la revendication 6, est mélangée avec de l'eau désionisée et de l'alcool isopropylique,
- du triméthoxyméthylsilane est dilué dans le mélange sous agitation, et une solution aqueuse d'hydroxyde de sodium est ajoutée à celui-ci pour porter le pH à approximativement 4,5,
- le pigment et/ou l'opacifiant facultatifs sont ajoutés et, après agitation, le revêtement est filtré.

9. Utilisation de céramères selon les revendications 1 à 7, pour leur application sur des surfaces métalliques.

10. Utilisation selon la revendication 9, dans laquelle ladite application est constituée d'une ou plusieurs couches de céramères superposées.
